Europäisches Patentamt

European Patent Office

Office européen des brevets

(19)

(11) **EP 1 256 892 A1**

(12) **EUROPEAN PATENT APPLICATION**

(43) Date of publication:
**13.11.2002 Bulletin 2002/46**

(51) Int Cl.[7]: **G06F 17/60**

(21) Application number: **02076576.4**

(22) Date of filing: **22.04.2002**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **07.05.2001 IT MI20010928**

(71) Applicant: **Koinos S.a.s. di Penati Carlo & Co.**
**20025 Legnano (MI) (IT)**

(72) Inventors:
• **Penati, Carlo, c/o Koinos S.a.s. di Penati Carlo**
**20025 Legnano (IT)**
• **Leoni, Giuseppe,**
**c/o Koinos S.a.s. di Penati Carlo**
**20025 Legnano (IT)**

(74) Representative: **Riccardi, Sergio**
**Riccardi & Co.**
**Via Macedonio Melloni, 32**
**20129 Milano (IT)**

(54) **A method for the mapping of the human resources of a socio-economic enterprise**

(57) A method for the composition of the human resources mapping of a socio-economic enterprise, like a company for example, is described, a method that displays on a Cartesian plane the complexity of the ana-lysed persons as well as that of the assigned roles or roles to be assigned to such persons, thus verifying its adequacy, and also the map obtained through such method.

*Fig.2*

EP 1 256 892 A1

**EP 1 256 892 A1**

**Description**

The present invention is about a method that consists in evaluating the available human resources of any socio-economic enterprise to verify the adequacy of their position and the possibility of adjustment of those positions that proved to be inappropriate with respect to the persons' skills and/or to the complexity of their role. The invention is also about the map obtained through such method.

It is well known that a socio-economic enterprise's administration of human resources, being that of a business, a professional firm, an either public or private company or an institution too, is one of the problems, if not the most difficult problem to deal with and to solve.

As a matter of fact, it is inevitable that a person's ability and the tasks assigned to a specific role by an organisation chart are not inflexible, but on the contrary are subjected to changes through time and/or space depending on a large number of variables.

The object of the present invention is to provide a surprisingly practical and reliable method, also ready to verify, evaluate and thus plan the use of human resources at any level within a socio-economic enterprise, even if such method is obviously particularly suitable for the administration of the middle management and/or the executive level of such enterprise.

In brief, the method according to the current invention consists in drawing with remarkable precision a map of the human resources available to a socio-economic enterprise where each person is identified by a point on the map, corresponding to a total score estimated according to several variables, said point having been defined by a couple of Cartesian coordinates that show the degree of complexity of the role held by such person.

Although the method, as previously mentioned, is apt for the administration of human resources in any socio-economic enterprise, said method will be illustrated in details in the course of this description as realized for the mapping of a commercial or industrial company's human resources.

## 1- OBJECT OF THE HUMAN RESOURCES MAPPING

The mapping of human resources according to the present invention is a methodology aimed at:

- allowing a concise reading of the multiple variables concerning the processes of comprehension of the human resources (performances, potential, skills, positions, roles, critical position, income levels, etc.), minimizing the quantity of information and knowledge acquired on the employees to a few administrative data;
- providing a directional control panel for the undertaking in short times of the decisions relative to the collaborators' managing and development, at the same time reducing possible mistakes in the administrative decisions and their relative costs;
- clustering the company's personnel identifying administrative and staff development actions targeted to groups or to single persons according to the placement of the individuals in the elaborated map of human resources.

As a matter of fact, the mapping of human resources allows to:

- identify the company's key resources, namely the persons who because of their professional skills and of the specificity of their held roles are able to face successfully the company's future challenges;
- detect, through the mapping, the possible mismatches between the characteristics requested to the executive group and to the remaining workforce and the characteristics currently held;
- define a plan of administrative actions to lessen the discovered gaps;
- strengthen the motivation and the performances through systems of development and loyalty enhancement, able to promote the assimilation of the company's goals and to always generate more value for the shareholders and the clients, through actions aimed at particular sections of the population and at the individual's specific characteristics obtained by the mapping.

## 2 - CHARACTERISTICS OF THE HUMAN RESOURCES MAPPING

The illustration of the information regarding the company's personnel through overview maps allows to maintain the complexity of the observed phenomenon making it unanimous (transparency) and measurable (equity).

The company's elements which allow to draw a significant map of the personnel for its administration are:

- the persons' characteristics;
- the professional groups in which they are placed;
- the organizational positions and the roles held by them.

**EP 1 256 892 A1**

These dimensions and the factors determining them are measured with a scoring system. The set of all the points representing on a Cartesian plane the intersection between the complexity of an organizational position/role and the professional complexity of the person who holds it, is a map of the company's human resources.

For this reason, the mapping of human resources according to the present invention is mainly based on:

- the complexity of the personnel's professional profile, taken into consideration the fact that it is reported on the y-axis in an ascending order of complexity;
- the complexity of the organizational positions and/or roles held by them, which is also reported in ascending order on the x-axis.

In order to reveal and measure the professional complexity of the human resources the information obtained by three systems of comprehension of the staff's attributes are utilized as a priority:

- potentials enjoyed by the workforce: the level of adequacy of the role held and the degree of adjustment to the company's values;
- performances accomplished; ability to achieve the company's goals, to generate the expected performances and to satisfy the external and internal clients' needs;
- skills exploited; knowledge, managerial abilities and necessary behaviours for properly completing their own task and to achieve the requested performances.

Further information, in addition to these three fundamental elements, can be obtained from other systems of comprehension and categorization of the human resources existing at each individual company.

The information regarding the human resources' potential, performances and skills (in addition to those referring to further possible systems) are calculated by a special formula that allows getting a single score from the combination of three (or more) partial scores.

Said formula is thus illustrated:

$$MRK = f(Cpos;Cpers)$$

Where

$$Cpos = PP*(a+b)/c+OO*(d+e)/f$$

$$Cpers = Pr*(g+h)/l+C*(l+m)/n+Po*(o+p)/q+X*(r+s)/t$$

As a matter of fact, the mapping is the representation on the X and Y axes of a three variables numerical series wherein the variable X is the function of the complexity of the position, the variable Y is the function of the complexity of the person and Z is the function of one or more variables difined from time to time, for example, as the annual gross income, the age, the company's seniority. Variable Z (which is graphically portrayed by a circle) is represented by the area or the diameter of the point indicated by the coordinates X and Y and it identifies the position of the single person on the map.

Legend:

| | |
|---|---|
| **MRK =** | Mapping Resources Koinos |
| **Cpos =** | Complexity of the position |
| **PP =** | Weight of the position (detected with universal generic instruments) |
| **OO** = | Weight of the organizational observation (detected with specific context analyses) |
| **Cpers** = | Complexity of the person |
| **Pr** = | Evaluation of the performances (qualitative/quantitative analyses of the obtained results) |
| **C** = | Evaluation of the skills (analysis of the expertise, abilities, and organizational behaviours held) |
| **Po** = | Evaluation of the potential (analysis of the relative or absolute attitude) |
| **X** = | Further elements of individual evaluation |

**a, d, g, l, o, r =**   weight of the relative information quality (ranging from 0.2 to 1) (indicator of the accuracy and precision of the data analysis)

**b, e, h, m, p, s =**   weight of the relative data analysis (ranging from 0.2 to 1) (indicator of the effective use of the data in the decision process)

**c, f, i, n, q, t =**   relative weight of the factor (ranging from 0.2 to 2)

Regarding the categorization of the complexity of the organizational position/role it is utilized a:

- system of weight determination of the positions and roles already existing in the company, incorporated from time to time with other important information;
- purposely arranged criteria such as the economic impact of the positions, the organizational dimensions and the typology of the requested skills, and - for the distribution networks - the calculated result of two variables: the life cycle of the sales-branches and the complexity of the supplied and the potential market.

During the data collection for the formulation of the map, it is crucial to also gather qualitative elements relative to:

- the risk related to the observed positions;
- the risk related to the persons.

The concept of risk refers to the company's characteristics and indicates the elements that introduce instabilities and administrative difficulties if not efficiently supervised.

Critical elements of the organizational position/role can be:

- the rate of personnel turnover;
- the average necessary time for an adequate cover;
- the number of replacements available at the company;
- the desirability, intended as attractiveness of the remuneration, of the associated status, and of the geographical location;
- the outsourcing availabity;
- the rarity/uniqueness of the associated skills;
- others, specific to the single considered business area.

These risk elements combined with the complexity of the position reveal the true vulnerability of a position: the more a position is complex and presents some risk elements the more critical its administration will be, requiring personalized managing and development policies.

Even for persons, the complexity combined with the risk exposes their true vulnerability. The person's risk elements can be:

- the level of motivation;
- the degree of expectation;
- the sense of company's belonging;
- the possibility of loss of the single resource;
- the rarity of the skills possessed;
- the disagreement with the reference superior(s);
- others, specific to the single considered activity area.

The representation on the map of such elements of vulnerability together with the data on the skills, performances, potential, etc., allows us to formulate hypotheses of administrative and development actions relative to the single person and/or clusters of the company's population.

A visual illustration described in the appended drawings of some practical examples of said mapping will now follow.

Fig. 1 is the general scheme of the Cartesian plane's partition in four identifying sections.

Fig. 2 is an example of mapping with subjects' numerical identification.

Fig. 3 is an example of map that serves to emphasize a particular information on the sampled population, in this case the subjects' age and/or seniority.

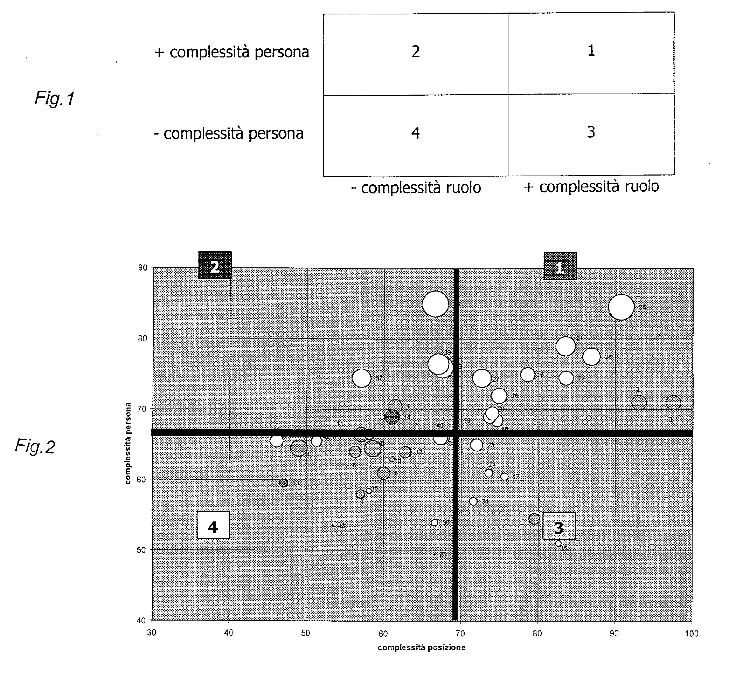

The mapping of human resources creates as first outcome the map of the person's role complexity, which identifies, in the resulting four sections, four clusters of the population with very precise administrative and developmental values, such sections are shown in Fig. 1 of the appended drawings.

Section "1" represents the key individuals, that is the best persons that hold the roles of most responsibility.
Section "2" represents the emerging people, possible substitutes of the key individuals.
Section "3" represents the critical resources, because presently inadequate for the positions held.
Section "4" represents the area of the adequate resources.

Fig. 2 illustrates an example of general mapping, wherein each point is numbered and corresponds to an individual, who can therefore be found on the matching list or through the direct use of the computer by clicking on such point and then opening its file. However, the name of the person matching each point on the map can be also fully displayed.

While the interaction between the complexity of the position and that of the person is represented by a point on the map, the dimension of the point (circle) represents a third data that can vary according to the contingent specific needs. For example the circle's size can represent:

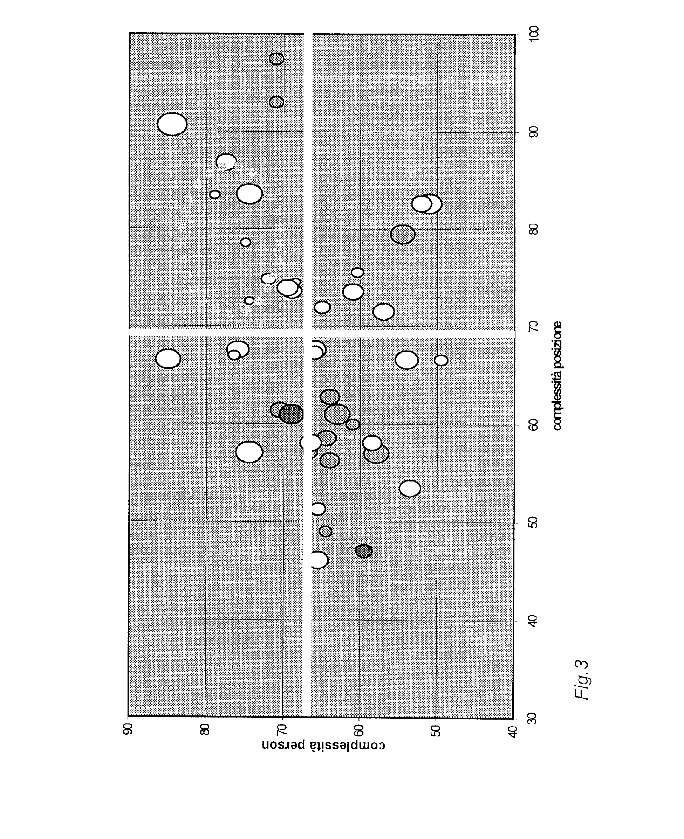

- the age/seniority. This kind of representation emphasizes, like the example shown in Fig. 3, if the key resources need a long period of experience in order to be defined as such (section 1 has a good incidence of circles of a considerable size), or if young resources exist who will guarantee the future growth; or, furthermore, if the critical resources are critical because they are at the end of the company's growth cycle. The scheme of Fig. 3 underlines the fact that a breeding-ground for youngsters, who mostly place themselves on the upper part of the map, exists.

- the remuneration. It allows to compare the resources' compensational elements with similar features and values, in order to evaluate possible adjustments, define policies, identify persons who could exit the company, etc.;

- the skills. It allows to monitor the adequacy of key or emerging resources, to define the expected goals for the executive managers, and to detect the company's critical areas.

Furthermore the circle can represent other information based on the assigned colour and on its insertion of distinctive symbols, which can reveal the degree of vulnerability of the human resources.

Clearly, the present invention's mapping scheme is perfectly suitable for the computerized data processing, in addition to being of easy and immediate reading on the respective monitor.

Moreover, the method is not only appropriate for the administration of human resources according to the company's organisation chart, that is for the familiarization of the persons to their roles, but it is seemingly fit for the opposite condition, namely for the adjustment of the roles according to the persons' availability, particularly when finding the right person for the role turns out to be difficult or even impossible. In such case, it will be enough to redefine the roles, thus changing the categorization of their complexity, and subsequently re-elaborating the map for the same available persons. A different map will obviously be obtained through which the person's role according to the resulting organisation chart can be analysed again.

## 3- THE PROCESS FOR THE APPLICATION OF THE HUMAN RESOURCES MAPPING

In order to apply the methodology of the human resources mapping the following steps are taken:

1) Illustration and personalization of the human resources mapping .
2) Identification of the necessary information to reveal the person's complexity and the complexity of the organizational position/role and of the sources from which to get them.
3) Analysis of the available data, verifying its entirety, the degree of reliability, the originality, the current methods of filing, the taxonomies and the scoring scale in use, the correlations utilized for administrative ends, the integration into a methodological and theoretical system. During this first phase all the present information's sources must be identified, starting to analize the variables that compose them, in order to define the weight and the grading scale to apply to the resources' mapping.
4) Disposition of the model for the definition of the weight and of the grading scale to apply to the collected data.
5) Integration of the possible deficiencies recovering or creating the lacking information, updating the databases and inserting the requested data.
6) Restructuring of the decisional process in use for the administration of the human resources emphasizing the use and finality of the utilized information.
7) Survey of the critical elements for the managing of the persons and of the organizational positions starting from the constant factors that affect the decisional processes, making them weak and unstable also through direct interviews to the holders of the needed information.

8) Disposition of the databases for the simulations and the maps, withdrawal of the loaded information and the application of the supposed weighings, corroboration of the representativeness of the map. Elaboration of the collected information and data.

9) Selection of the graphic illustrations, disposition of the resulting map and its validation by the clients.

10) Identification and definition of the administrative actions referred to single persons or groups of people through interviews to the direct executives and definition of the objectives relative to the administration of the company's human resources.

From the previous detailed description of the method it is understood that such method fully accomplishes the fixed objectives and provides an instrument of great value for companies and for their consultants, greatly facilitating the administration of human resources. At last, it must be emphasized that several modifications, additions, variations and/or substitutions could be made to the basic method, without departing from its spirit and without falling out of the scope of protection as also indicated in the appended claims.

## Claims

1.   A method for the mapping of human resources available to a socio-economic enterprise **characterized in that** of identifying each person by a point on the map corresponding to a total score estimated according to several variables, said point having been defined by a couple of Cartesian coordinates that respectively show the degree of complexity of the person and the degree of complexity of the role held by such person in the context of said socio-economic enterprise.

2.   The method according to claim 1, **characterized in that** the score is calculated based on the formula:

$$MRK = f(Cpos;Cpers)$$

where

$$Cpos = PP*(a+b)/c+OO*(d+e)/f$$

$$Cpers = Pr*(g+h)/l+C*(l+m)/n+Po*(o+p)/q+X*(r+s)/t$$

wherein the symbols have the following meanings:

**MRK =**            Mapping Resources Koinos

**Cpos** =            Complexity of the position

**PP** =            Weight of the position (detected with universal generic instruments)

**OO** =            Weight of the organizational observation (analysed with specific context analyses)

**Cpers** =            Complexity of the person

**Pr** =            Evaluation of the performances (qualitative/quantitative analyses of the obtained results)

**C** =            Evaluation of the skills (analysis of the expertise, abilities, and organizational behaviours held)

**Po** =            Evaluation of the potential (analysis of the relative or absolute attitude)

**X** =            Further elements of individual evaluation

**a, d, g, l, o, r =**            weight of the relative information quality (ranging from 0.2 to 1) (indicator of the accuracy and precision of the data analysis)

**b, e, h, m, p, s =** weight of the relative data analysis (ranging from 0.2 to 1) (indicator of the effective use of the data in the decision process)

**c, f, i, n, q, t =** relative weight of the factor (ranging from 0.2 to 2)

3. The method according to claim 1, **characterized in that** the map's Cartesian plane reports on the y-axis the person's complexity and on the x-axis the complexity of the role and it is divided in four sections, of which the section with more complexity of both the person and the role represents the key individuals, the section of more complexity of the person and less complexity of the role represents the emerging people, the section of more complexity of the role and less complexity of the person represents the critical resources, and the section with less complexity of both the person and the role represents the adequate resources area.

4. The method according to claim 1, **characterized in that** the person's identification point on the map has a changeable size or circle representing one or more varying and additional information.

5. The method according to claim 4, **characterized in that** the circle can represent further information based on the colour assigned to it and/or on its insertion of distinctive symbols, revealing of specific requirements or degrees of crisis.

6. The method according to one or more of the previous claims, **characterized in that** the map can be electronically elaborated and visualized on the screen through direct access from the selected point in the computerized data archive regarding the persons and/or the roles.

7. The method according to one or more of the previous claims, **characterized in that** an identification number or a name of the corresponding person is associated to each point, said identification number or name matching said person's data stored in a paper or electronic archive, the latter also directly accessible on the map reproducing screen.

8. A map of the human resources available to a socio-economic enterprise drawn on a Cartesian plane **characterized in that** each person is identified by a point on the map corresponding to a total score calculated according to several variables, said point having been defined by a couple of Cartesian coordinates that show respectively the degree of complexity of the person and the degree of complexity of the role held by such person in the context of said socio-economic enterprise.

9. The map according to claim 8, **characterized in that** the score is calculated based on the formula:

$$MRK = f(Cpos; Cpers)$$

where

$$Cpos = PP*(a+b)/c + OO*(d+e)/f$$

$$Cpers = Pr*(g+h)/l + C*(l+m)/n + Po*(o+p)/q + X*(r+s)/t$$

wherein the symbols have the following meanings:

| | |
|---|---|
| **MRK =** | Mapping Resources Koinos |
| **Cpos =** | Complexity of the position |
| **PP =** | Weight of the position (detected with universal generic instruments) |
| **OO =** | Weight of the organizational observation (analysed with specific context analyses) |
| **Cpers =** | Complexity of the person |
| **Pr =** | Evaluation of the performances (qualitative/quantitative analyses of the obtained results) |
| **C =** | Evaluation of the skills (analysis of the expertise, abilities, and organizational behaviours held) |
| **Po =** | Evaluation of the potential (analysis of the relative or absolute attitude) |

| | |
|---|---|
| **X =** | Further elements of individual evaluation |
| **a, d, g, l, o, r =** | weight of the relative information quality (ranging from 0.2 to 1) (indicator of the accuracy and precision of the data analysis) |
| **b, e, h, m, p, s =** | weight of the relative data analysis (ranging from 0.2 to 1) (indicator of the effective use of the data in the decision process) |
| **c, f, i, n, q, t =** | relative weight of the factor (ranging from 0.2 to 2) |

10. The map according to claim 8, **characterized in that** the map's Cartesian plane reports on the y-axis the person's complexity and on the x-axis the complexity of the role and it is divided in four sections, of which the section with more complexity of both the person and the role represents the key individuals, the section of more complexity of the person and less complexity of the role represents the emerging people, the section of more complexity of the role and less complexity of the person represents the critical resources, and the section with less complexity of both the person and the role represents the adequate resources area.

11. The map according to claim 8, **characterized in that** the person's identification point on the map has a changeable size or circle representing one or more varying and additional information.

12. The map according to claim 11, **characterized in that** the circle can represent further information based on the colour assigned to it and/or on its insertion of distinctive symbols, revealing of specific requirements or degrees of crisis.

13. The map according to one or more of claims from 8 to 12, **characterized in that** the map can be electronically elaborated and visualized on the screen through direct access from the selected point in the computerized data archive regarding the persons and/or the roles.

14. The map according to one or more of claims from 8 to 13, **characterized in that** an identification number or a name of the corresponding person is associated to each point, said identification number or name matching said person's data stored in a paper or electronic archive, the latter also directly accessible on the map reproducing screen.

15. An application of the map according to one or more of claims from 8 to 14, for the administration of human resources in a socio-economic enterprise, verifying the adequacy of their position and the possibility of adjustment of such position.

16. The application of the map according to one or more of claims from 8 to 14, for the administration of human resources in a socio-economic enterprise, adjusting the fixed positions in the organisation chart according to the available human resources.

17. The method for the mapping of human resources, mainly as previously described and as illustrated in the explanatory appended drawings.

18. The map of the human resources available to a socio-economic enterprise, mainly as previously described and as illustrated in the explanatory appended drawings.

19. The map of the human resources whenever obtained through the method according to one or more of claims from 1 to 7.

*Fig.1*

|  | − complessità ruolo | + complessità ruolo |
|---|---|---|
| + complessità persona | 2 | 1 |
| − complessità persona | 4 | 3 |

*Fig.2*

complessità persona

**2**     **1**

**4**     **3**

complessità posizione

Fig.3

**European Patent Office**

**DECLARATION**

which under Rule 45 of the European Patent Convention shall be considered, for the purposes of subsequent proceedings, as the European search report

Application Number

EP 02 07 6576

| The Search Division considers that the present application, does not comply with the provisions of the EPC to such an extent that it is not possible to carry out a meaningful search into the state of the art on the basis of all claims | CLASSIFICATION OF THE APPLICATION (Int.Cl.7) |
|---|---|
| Reason: | G06F17/60 |

The claims relate to subject matter excluded from patentability under Art. 52(2) and (3) EPC. Given that the claims are formulated in terms of such subject matter or merely specify commonplace features relating to its technological implementation, the search examiner could not establish any technical problem which might potentially have required an inventive step to overcome. Hence it was not possible to carry out a meaningful search into the state of the art (Rule 45 EPC). See also Guidelines Part B Chapter VIII, 1-6.

The applicant's attention is drawn to the fact that a search may be carried out during examination following a declaration of no search under Rule 45 EPC, should the problems which led to the declaration being issued be overcome (see EPC Guideline C-VI, 8.5).

---
-----

| Place of search | Date | Examiner |
|---|---|---|
| THE HAGUE | 19 August 2002 | Papastefanou, E |

EPO FORM 1504 (P04C37)